# EUROPEAN PATENT SPECIFICATION

(11) **EP 3 612 986 B1**
(45) Date of publication and mention of the grant of the patent: **14.02.2024**
(21) Application number: 17725800.1
(22) Date of filing: 19.04.2017
(51) Int. Cl.: G06K 19/07, G06K 19/077

(54) **SYSTEMS AND METHODS FOR ENCODING SECURITY TAGS WITH DYNAMIC DISPLAY FEATURE**
SYSTEME UND VERFAHREN ZUR CODIERUNG VON SICHERHEITSTAGS MIT DYNAMISCHER ANZEIGEFUNKTION
SYSTÈMES ET PROCÉDÉS DE CODAGE D'ÉTIQUETTES DE SÉCURITÉ À CARACTÉRISTIQUE D'AFFICHAGE DYNAMIQUE

(43) Date of publication of application: 26.02.2020
(73) Proprietor: Sensormatic Electronics, LLC, Boca Raton, FL 33487 (US)
(72) Inventor: BERGMAN, Adam, S., Boca Raton, FL 33486 (US)
(74) Representative: Hafner & Kohl PartmbB
(86) International application number: PCT/US2017/028373
(87) International publication number: WO 2018/194588

(56) References cited:
- US-A1- 2009 295 549
- US-A1- 2012 126 982
- US-A1- 2015 270 776

## Description

### BACKGROUND

### Statement of the Technical Field

The present disclosure concerns generally to labels and tags which display item related information (e.g., pricing information). More particularly, the present invention relates to implementing systems and methods for encoding display tags.

### Description of the Related Art

Many of merchandise in a department store have a printed tag attached to them that displays information about the product (such as the item's price and/or description). Furthermore, the same pricing tag may have an EAS component embedded therein or attached thereto for theft prevention. Once a pricing tag is affixed to a product, the information on the pricing tag cannot be easily modified.

In some scenarios, price labels are used to display the price for a group of merchandise. The price labels are often paper-based labels affixed to the shelves on which the merchandise is disposed. Paper-based labels require the tedious and manually-intensive process of printing and applying new labels every time there is a price or product description update. This is a laborious and time-consuming process for store associates.

### SUMMARY

The present invention concerns implementing systems and methods for operating an EST. The methods comprise: harvesting, by an energy harvesting circuit of the EST, energy from an external energy source (e.g., a magnetic field or RF signal); using the energy to power at least a receiver and a display device of the EST; performing signal reception operations by the receiver to receive an original information bearing signal modulated in the external energy source; processing the original information bearing signal to obtain item related information therefrom; and causing the item related information to be displayed on the display device. Notable, the supply of power to at least the display device is discontinued subsequent to when the item related information is displayed thereon.

In some scenarios, the original information bearing signal is modulated more than once in the external energy source. The original information bearing signal is modulated in the external energy source during the harvesting. The original information bearing signal comprises a first indicator indicating a start of the item related information and a second indicator indicating an end of the item related information.

In those or other scenarios, the energy harvesting circuit comprises (1) a coil that is excited via a magnetic coupling to the external energy source and (2) a capacitor that stores energy derived from the external energy source. The power is supplied to the receiver and a display device when the capacitor is partially or fully charged. Notably, the coil is part of the receiver and is used for magnetic induction communication of the original information bearing signal.

### BRIEF DESCRIPTION OF THE DRAWINGS

Embodiments will be described with reference to the following drawing figures, in which like numerals represent like items throughout the figures.
FIG. 1 is an illustration of an exemplary inventory system.
FIG. 2 is an illustration of an exemplary display for an Electronic Smart Tag ("EST").
FIG. 3 provides an illustration of an exemplary architecture for the EST of FIG. 2.
FIG. 4 provides an illustration of an exemplary architecture for an EST.
FIG. 5 is an illustration of an exemplary energy source.
FIG. 6 is a flow diagram of an exemplary method for operating an EST.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Furthermore, the described features, advantages and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

Dynamic displays are frequently used today in the marketplace. To support the integration of dynamic displays with security tags, a novel method is employed herein that (a) minimizes the extra weight of the security tags caused by incorporation of the dynamic displays therein and (b) does not require batteries to be provided for powering the electronic components of the security tags. Accordingly, the present solution concerns systems and methods for driving a dynamic display located in a security tag without a radio and/or battery. This is achieved by configuring the security tag to harvest energy from an external energy source (e.g., a magnetic field or RF signal). The harvested energy is then used to power the electronic components of the security tag. For example, the dynamic display is supplied power when information output therefrom needs to be updated. Notably, the dynamic display does not require any energy to be maintained. The only time power needs to be applied to the dynamic display is when the displayed information is to be changed (i.e., power is not required for the continued display of the updated information).

In some scenarios, this power is supplied by way of a coil located in the security tag. The coil is excited via its magnetic coupling to an external magnetic source (e.g., a handheld tag scanner) when the information displayed on the dynamic display is to be changed. As a result of the coil excitation, a storage device disposed in the security tag is charged. The storage device can include, but is not limited to, a capacitor. When the storage device is partially or fully charged, the new information is received at the security tag via a magnetic induction communication (e.g., by a series of magnetic pulses communicating the new information in an encoded format). The new information is then decoded in the security tag, and thereafter displayed on the dynamic display.

In other scenarios, this power is supplied by way of an antenna located in the security tag. The antenna is coupled to an RF energy harvester that collects energy from a received RF signal. The collected energy is stored in a storage device (e.g., a capacitor). When the storage device is partially or fully charged, the new information is received at the tag via an RF communication (e.g., by a modulated RF carrier wave communicating the new information in an encoded format). The new information is decoded in the tag, and thereafter displayed on the dynamic display.

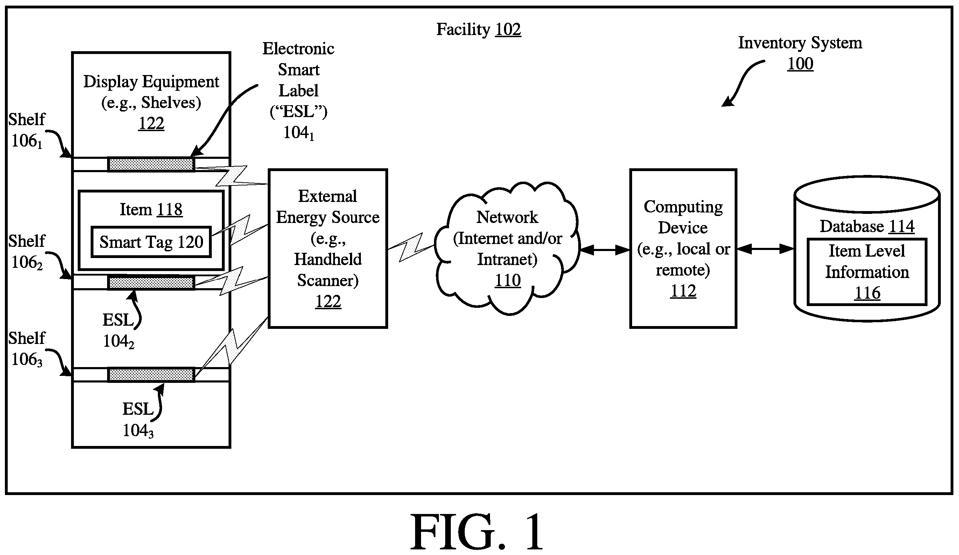

Referring now to FIG. 1, there is provided an illustration of an exemplary inventory system **100.** Inventory system **100** is entirely or at least partially disposed within a facility **102.** The facility **102** can include, but is not limited to, a manufacturer's facility, a distribution center facility, a retail store facility or other facility within a supply chain.

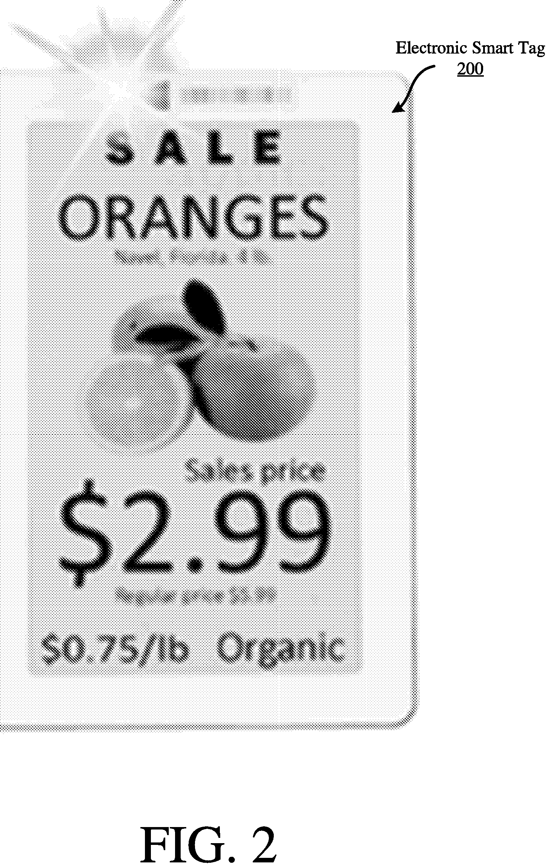

As shown in FIG. 1, at least one item **118** resides within the facility **102.** The item **118** has an EST **120** coupled thereto. This coupling is achieved via an adhesive (e.g., glue), a mechanical coupler (e.g., straps, clamps, snaps, etc.), a weld, chemical bond or other means. The EST **120** is generally configured to provide a visual and/or auditory output of item level information. The item level information includes, but is not limited to, an item description, item nutritional information, a promotional message, an item regular price, an item sale price, a currency symbol, and/or a source of the item. The EST **120** will be described in detail below in relation to FIGS. 2-4. The item level information can be output in a format selected from a plurality of formats based on a geographic location of the item, a date, and/or an item pricing status (e.g., whether the item is on sale). In a display context, the format is defined by a font parameter, a color parameter, a brightness parameter, and/or a display blinking parameter. In an auditory context, the format is defined by a volume parameter, a voice tone parameter, and/or a male/female voice selection parameter.

The item **118** is disposed on display equipment **122**. The display equipment includes, but is not limited to, shelves **106₁-106₃**, display cabinets, and/or exhibit cases. In the shelf scenario, each shelf **106₁-106₃** may have an Electronic Smart Label ("ESL") affixed thereto. ESLs are well known in the art, and therefore will not be described herein. Still, it should be understood that the ESLs display information relating to the items stored on the respective shelves.

The EST **120** and ESLs **104₁-104₃** comprise wireless communication components that enable the communication of item level information thereto and/or therefrom. The wireless communication components implement near field magnetic induction communication technology or RF communication technology. Near field magnetic induction communication technology and RF communication technology are well known in the art, and therefore will not be described herein. Any known or to be known near field magnetic induction communication technology and/or RF communication technology can be used herein without limitation.

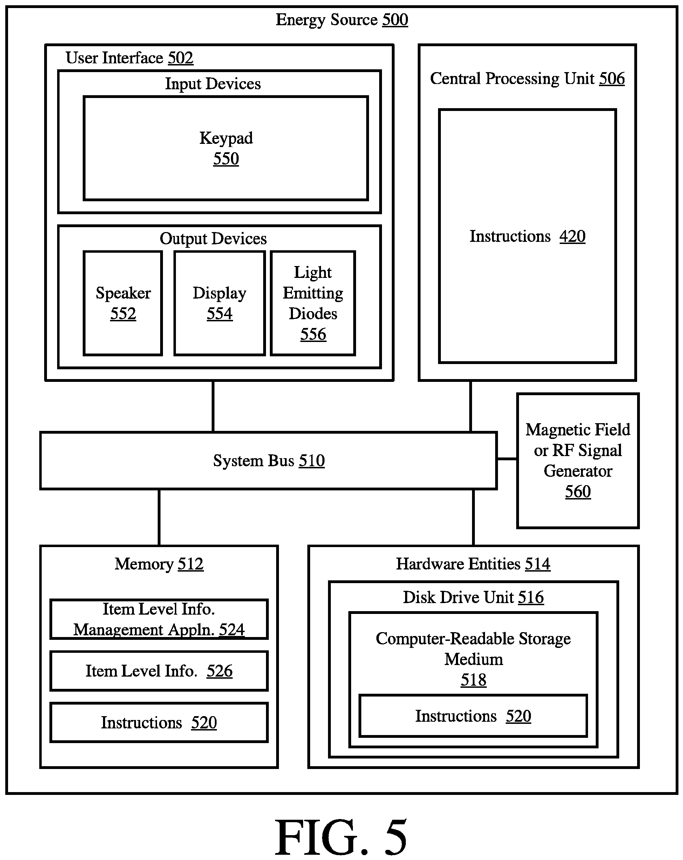

The item level information is provided to the EST and ESLs from a computing device **112** via a network **110** and an external energy source **122** (e.g., a handheld scanner). The computing device **112** can be local to the facility **102** as shown in FIG. 1 or remote from the facility **102**. The computing device **112** will be described in detail below in relation to FIG. 5. However, at this time, it should be understood that the computing device **112** is configured to: write data to and read data from a database **114**, EST **120** and/or ESLs **104₁-104₃**; and/or perform language and currency conversion operations using item level information obtained from the database **114**, EST **120** and/or ESLs **104₁-104₃**. The data can include, but is not limited to, item level information **116**.

Accordingly, the computing device **112** facilitates updates to the item level information output from the ESTs and ESLs. Such information updating can be performed periodically, in response to instructions received from an associate (e.g., a retail store employee), and/or in response to a detected change in the item level information **116**. For example, if a certain product is placed on sale, then the sale price for that product is transmitted to the external energy source **122** via a long range communication (e.g., an RF communication), which in turn transmits the sale price to each EST/ESL associated with that product via a near field magnetic induction communication or RF communication. The sale price is then output from the ESTs/ESLs. The present solution is not limited to the particulars of this example.

The network **110** interconnects the computing device **112** with the external energy source **122**. Network **110** can be a wired or wireless network facilitating communication between computing device **112** and the external energy source **122**. The external energy source **122** receives the item level information **116** from the computing device **112**, optionally translates and/or encodes this information, and sends it to the EST **120** and/or ESLs **104₁-104₃** via near field magnetic induction communication(s) or RF communication(s).

Although a single computing device **112** is shown in FIG. 1, the present solution is not limited in this regard. It is contemplated that more than one computing device can be implemented. Also, the present solution is not limited to the exemplary inventory system architecture described in relation to FIG. 1.

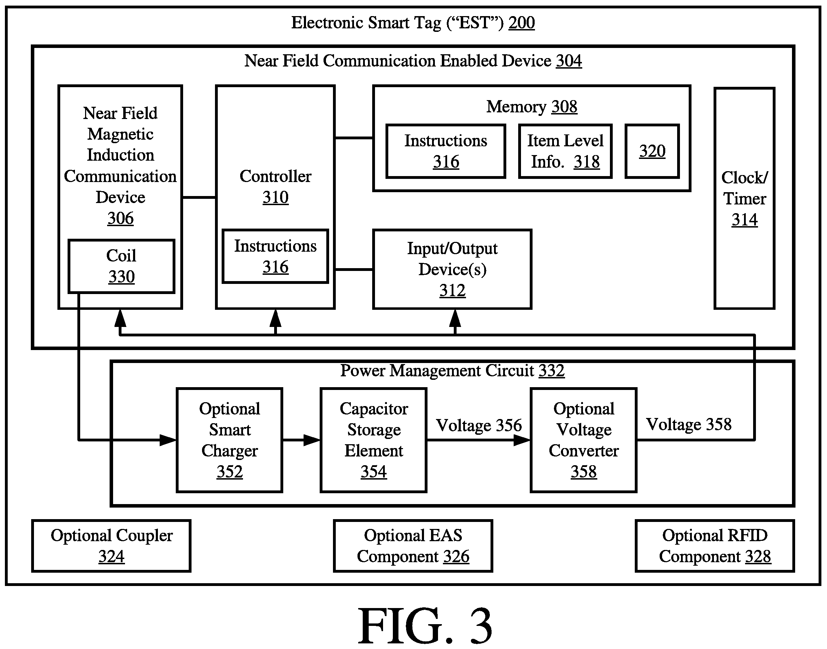

Referring now to FIG. 2, there is an illustration of an exemplary EST **200** displaying item level information. An exemplary architecture for the EST **200** is provided in FIG. 3. EST **120** and/or ESLs **104₁-104₃** of FIG. 1 is/are the same as or substantially similar to EST **200**. As such, the discussion of EST **200** is sufficient for understanding the EST **120** and/or ESLs **104₁**-**104₃** of FIG. 1.

The EST **200** can include more or less components than that shown in FIG. 3. However, the components shown are sufficient to disclose an illustrative embodiment implementing the present solution. Some or all of the components of the EST **200** can be implemented in hardware, software and/or a combination of hardware and software. The hardware includes, but is not limited to, one or more electronic circuits. The electronic circuit(s) may comprise passive components (e.g., capacitors and resistors) and active components (e.g., processors) arranged and/or programmed to implement the methods disclosed herein.

The hardware architecture of FIG. 2 represents a representative EST **200** configured to facilitate improved inventory pricing management. In this regard, the EST **200** is configured for allowing data to be exchanged with an external device (e.g., external energy source **122** and/or computing device **112** of FIG. 1) via wireless communication technology. The wireless communication technology can include, but is not limited to, near field magnetic induction communication technology.

The components **306-314** shown in FIG. 3 may be collectively referred to herein as a near field communication enabled device **304**, and include a memory **308** and a clock/timer **314**. Memory **308** may be a volatile memory and/or a non-volatile memory. For example, the memory **308** can include, but is not limited to, Random Access Memory ("RAM"), Dynamic RAM ("DRAM"), Static RAM ("SRAM"), Read Only Memory ("ROM") and flash memory. The memory **308** may also comprise unsecure memory and/or secure memory.

As shown in FIG. 3, the near field communication enabled device **304** comprises a Near Field Magnetic Induction Communication ("NFMIC") device **306** for allowing data to be exchanged with an external device via a wireless communication technology. NFMICs are well known in the art, and therefore will not be described herein. Any known or to be known NFMIC can be used herein without limitation. In some cases, the NFMIC generates and magnetically transmits signals to external devices, as well as receives signals magnetically transmitted from external devices. In this way, the communication enabled device **304** facilitates the registration, identification, location and/or tracking of an item (e.g., item **118** of FIG. 1) to which the EST **200** is coupled. The communication enabled device **304** also facilitates the automatic and dynamic modification of item level information that is being or is to be output from the EST **200** in response to certain trigger events. The trigger events can include, but are not limited to, the EST's arrival at a particular facility (e.g., facility **102** of FIG. 1), the EST's arrival in a particular country or geographic region, a date occurrence, a time occurrence, a price change, and/or the reception of user instructions.

Item level information **318** and/or other information **320** associated with the identification and/or location of the EST **200** can be stored in memory **308** of the communication enabled device **304** and/or communicated to other external devices (e.g., computing device **112** of FIG. 1) via NFMIC device **306**. For example, the communication enabled device **304** can communicate information specifying a timestamp, a unique identifier, item description, item price, a currency symbol and/or location information to an external computing device. The external computing device (e.g., an external energy source **122** of FIG. 1) can then store the information in a database (e.g., database **114** of FIG. 1) and/or use the information during language and/or currency conversion operations.

The communication enabled device **304** also comprises a controller **310** and input/output devices **312**. The controller **310** can also execute instructions **316** implementing methods for facilitating the management of item pricing. In this regard, the controller **310** includes a processor (or logic circuitry that responds to instructions) and the memory **308** includes a computer-readable storage medium on which is stored one or more sets of instructions **316** (e.g., software code) configured to implement one or more of the methodologies, procedures, or functions described herein. The instructions **316** can also reside, completely or at least partially, within the controller **310** during execution thereof by the EST **200**. The memory **308** and the controller **310** also can constitute machine-readable media. The term "machine-readable media", as used here, refers to a single medium or multiple media (e.g., a centralized or distributed database, and/or associated caches and servers) that store the one or more sets of instructions **316**. The term "machine-readable media", as used here, also refers to any medium that is capable of storing, encoding or carrying a set of instructions **316** for execution by the EST **200** and that cause the EST **200** to perform any one or more of the methodologies of the present disclosure.

The input/output devices can include, but are not limited to, a display (e.g., an LCD display, a segmented display, and/or an active matrix display), a speaker, a keypad and/or light emitting diodes. The segmented display and/or active matrix display can include those available from E Ink Corporation of Cambridge, Massachusetts. The display is used to present item level information in a textual format and/or graphical format. Similarly, the speaker may be used to output item level information in an auditory format. The speaker and/or light emitting diodes may be used to output alerts for drawing a person's attention to the EST **200** and/or for notifying the person of a particular pricing status (e.g., on sale status) of the item to which the EST is coupled.

The clock/timer **314** is configured to determine a date, a time, and/or an expiration of a pre-defined period of time. Technique for determining these listed items are well known in the art, and therefore will not be described herein. Any known or to be known technique for determining these listed items can be used herein without limitation.

The EST **200** also comprises an optional coupler **324** to securely or removably couple the EST **200** to an item (e.g., item **118** of FIG. 1). The coupler **324** includes, but is not limited to, a mechanical coupling means (e.g., a strap, clip, clamp, snap) and/or adhesive (e.g., glue or sticker). The coupler **324** is optional since the coupling can be achieved via a weld and/or chemical bond.

The EST **200** can also include an optional Electronic Article Surveillance ("EAS") component **326** and/or an optional passive/active/semi-passive RFID component **328**. Each of the listed optional components **326**, **328** is well known in the art, and therefore will not be described herein. Any known or to be known EAS component and/or RFID component can be used herein without limitation.

The power management circuit **332** is generally configured to control the supply of power to the components of the EST **200**. The power management circuit **334** is not limited to the particular architecture shown in FIG. 3. In this regard, it should be understood that the power management circuit **332** can include more or less components than that shown in FIG. 3.

As shown in FIG. 3, the power management circuit **332** comprises an optional smart charger **352**, a capacitor storage element **354**, and an optional DC-DC voltage converter **358** electrically connected to a load(s) **304**. The smart charger **352** is generally configured to control and monitor the charging process of the capacitor storage element **354** (e.g., for purposes of ensuring efficient charging). The DC-DC voltage converter is generally configured to receive a voltage **356** output from the capacitor storage element **354** and change a level thereof so as generate voltage **358**.

Notably, the coil **330** of the NFMIC device **306** is electronically connected to the power management circuit **332** so that the capacitor storage element **354** is charged in response to an excitation thereof via an external magnetic energy source (e.g., external energy source **122** of FIG. 1). When the capacitor storage element **354** is at least partially charged (i.e., to a level that is sufficient to at least power the communication device **304** of the EST **200**), the power management circuit **332** supplies power to the NFMIC device **306**.

In turn, the NFMIC device **306** performs signal reception operations. For example, the NFMIC device **306** receives a signal communicated from the external magnetic energy source via magnetic induction communication technology. This reception is achieved by measuring a modulated magnetic field to obtain the original information-bearing signal therefrom. The modulated magnetic field is the same magnetic field that was used to collect energy by the power management circuit **332**. The signal comprises a series of magnetic pulses modulated in the magnetic field that communicates an original information bearing signal comprising new item related information in an encoded format. The series of magnetic pulses can be repeated any number of times within the signal. Notably, the signal includes a first start pulse or series of start pulses indicating the start of the encoded item related information, and a second end pulse or series of end pulses indicating the end of the encoded item related information.

Upon receipt of the signal, the NFMIC device **306** forwards the same to the controller 310. The signal is processed at the controller **310** to retrieve and decode the original information bearing signal communicating the new item related information. The new item related information is then stored in memory **308** and/or caused to be output from the EST **200**. For example, the new item related information is displayed on the display **312** so as to replace old item related information. The present solution is not limited to the particulars of this example. In some scenarios, the new item related information is alternatively or additionally output from the EST via a speaker.

Data modulation and coding (i.e., encoding and decoding) techniques are well known in the art, and therefore will not be described herein. Any known or to be known data modulation and coding technique (that is suitable for use with magnetic induction communications) can be used herein without limitation.

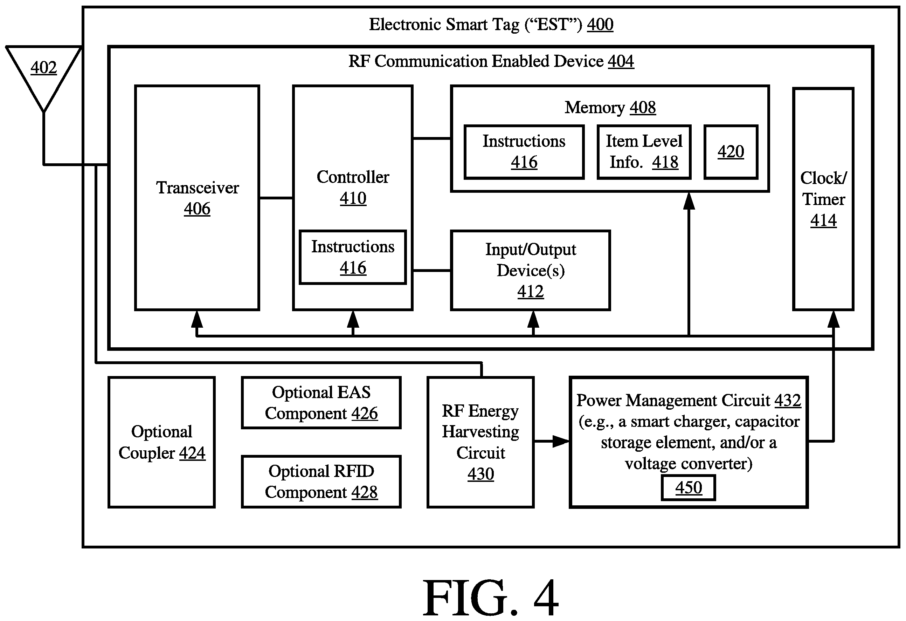

The present solution is not limited to the EST architecture shown in FIG. 3. Instead of employing magnetic induction to charge a capacitive storage element and/or communicate new item related information, Radio Frequency ("RF") energy harvesting and communication are implemented in the EST. An exemplary architecture for the RF based implementation is provided in FIG. 4.

Referring now to FIG. 4, the EST **400** is generally configured to display item level information. EST **120** and/or ESLs **104₁-104₃** of FIG. 1 can be the same as or substantially similar to EST **400**. The EST **400** can include more or less components than that shown in FIG. 4. However, the components shown are sufficient to disclose an illustrative embodiment implementing the present solution. Some or all of the components of the EST **400** can be implemented in hardware, software and/or a combination of hardware and software. The hardware includes, but is not limited to, one or more electronic circuits. The electronic circuit(s) may comprise passive components (e.g., capacitors and resistors) and active components (e.g., processors) arranged and/or programmed to implement the methods disclosed herein.

The hardware architecture of FIG. 4 represents a representative EST **400** configured to facilitate improved inventory pricing management. In this regard, the EST **400** is configured for allowing data to be exchanged with an external device (e.g., computing device **112** of FIG. 1) via wireless RF communication technology.

The components **406-414** shown in FIG. 4 may be collectively referred to herein as an RF communication enabled device **404**, and include a memory **408** and a clock/timer **414**. Memory **408** may be a volatile memory and/or a non-volatile memory. For example, the memory **408** can include, but is not limited to, Random Access Memory ("RAM"), Dynamic RAM ("DRAM"), Static RAM ("SRAM"), Read Only Memory ("ROM") and flash memory. The memory **408** may also comprise unsecure memory and/or secure memory.

As shown in FIG. 4, the RF communication enabled device **404** comprises a transceiver **406** for allowing data to be exchanged with an external device via a wireless communication technology. Transceivers are well known in the art, and therefore will not be described herein. However, it should be understood that the transceiver generates and transmits signals to external devices, as well as receives signals transmitted from external devices. In this way, the communication enabled device **404** facilitates the registration, identification, location and/or tracking of an item (e.g., item **118** of FIG. 1) to which the EST **400** is coupled. The communication enabled device **404** also facilitates the automatic and dynamic modification of item level information that is being or is to be output from the EST **400** in response to certain trigger events. The trigger events can include, but are not limited to, the EST's arrival at a particular facility (e.g., facility **102** of FIG. 1), the EST's arrival in a particular country or geographic region, a date occurrence, a time occurrence, a price change, and/or the reception of user instructions.

Item level information **418** and/or other information **420** associated with the identification and/or location of the EST **400** can be stored in memory **408** of the communication enabled device **404** and/or communicated to other external devices (e.g., computing device **112** of FIG. 1) via RF communication enabled device **404**. For example, the communication enabled device **404** can communicate information specifying a timestamp, a unique identifier, item description, item price, a currency symbol and/or location information to an external computing device. The external computing device (e.g., computing device **112** of FIG. 1) can then store the information in a database (e.g., database **114** of FIG. 1) and/or use the information during language and/or currency conversion operations.

The communication enabled device **404** also comprises a controller **410** and input/output devices **412**. The controller **410** can also execute instructions **416** implementing methods for facilitating the management of item pricing. In this regard, the controller **410** includes a processor (or logic circuitry that responds to instructions) and the memory **408** includes a computer-readable storage medium on which is stored one or more sets of instructions **416** (e.g., software code) configured to implement one or more of the methodologies, procedures, or functions described herein. The instructions **416** can also reside, completely or at least partially, within the controller **410** during execution thereof by the EST **400**. The memory **408** and the controller **410** also can constitute machine-readable media. The term "machine-readable media", as used here, refers to a single medium or multiple media (e.g., a centralized or distributed database, and/or associated caches and servers) that store the one or more sets of instructions **416**. The term "machine-readable media", as used here, also refers to any medium that is capable of storing, encoding or carrying a set of instructions **416** for execution by the EST 400 and that cause the EST **400** to perform any one or more of the methodologies of the present disclosure.

The input/output devices can include, but are not limited to, a display (e.g., an LCD display, a segmented display, and/or an active matrix display), a speaker, a keypad and/or light emitting diodes. The segmented display and/or active matrix display can include those available from E Ink. The display is used to present item level information in a textual format and/or graphical format. Similarly, the speaker may be used to output item level information in an auditory format. The speaker and/or light emitting diodes may be used to output alerts for drawing a person's attention to the EST **400** and/or for notifying the person of a particular pricing status (e.g., on sale status) of the item to which the EST is coupled.

The clock/timer **414** is configured to determine a date, a time, and/or an expiration of a pre-defined period of time. Technique for determining these listed items are well known in the art, and therefore will not be described herein. Any known or to be known technique for determining these listed items can be used herein without limitation.

The EST **400** also comprises an optional coupler **424** to securely or removably couple the EST **400** to an item (e.g., item **118** of FIG. 1). The coupler **424** includes, but is not limited to, a mechanical coupling means (e.g., a strap, clip, clamp, snap) and/or adhesive (e.g., glue or sticker). The coupler **324** is optional since the coupling can be achieved via a weld and/or chemical bond.

The EST **400** can also include an optional EAS component **426** and/or an optional passive/active/semi-passive RFID component **428**. Each of the listed optional components **426**, **428** is well known in the art, and therefore will not be described herein. Any known or to be known EAS component and/or RFID component can be used herein without limitation.

The RF energy harvesting circuit **430** is generally configured to harvest energy from an external RF source. RF energy harvesters are well known in the art, and therefore will not be described herein in detail. Any known or to be known RF energy harvester can be used herein without limitation. Energy harvested by the RF energy harvesting circuit **430** is provided to the power management circuit **432**.

The power management circuit **432** is generally configured to control the supply of power to the components of the EST **400**. The power management circuit **432** can include, but is not limited to, a smart charger (not shown), a capacitive storage element **450** and/or a voltage converter (not shown). In some scenarios, the power management circuit **432** is the same as or substantially similar to power management circuit **332** of FIG. 3.

Notably, the antenna **402** is electronically connected to the RF energy harvesting circuit **430** so that energy is harvested from RF signals received at the EST **400**. Harvested energy is then provided to the power management circuit **432** so that a capacitor storage element **450** is charged. When the capacitor storage element **450** is at least partially charged (i.e., to a level that is sufficient to at least power the communication device **404** of the EST **400**), the power management circuit **432** supplies power to the RF communications enabled device **404**.

In turn, the RF communications enabled device **404** performs signal reception operations. For example, the RF communications enabled device **404** receives a modulated carrier wave signal communicated from the external device (e.g., external energy source **110** and/or computing device **112**) via RF communication technology. Notably, the modulated carrier wave signal is the same RF signal used by the power management circuit **432** collect and store energy. The modulated carrier wave signal comprises an original information bearing signal communicating new item related information in an encoded format. The original information bearing signal can be repeated any number of times within the modulated carrier wave signal. Notably, the original information bearing signal includes a first start bit or series of start bits indicating the start of the encoded item related information, and a second end bit or series of end bit indicating the end of the encoded item related information.

Upon receipt of the original information bearing signal, the RF communications enabled device **404** forwards the same to the controller **410**. The original information bearing signal is processed at the controller **410** to retrieve and decode the new item related information. The new item related information is then stored in memory **408** and/or caused to be output from the EST **400**. For example, the new item related information is displayed on the display **412** so as to replace old item related information. The present solution is not limited to the particulars of this example. In some scenarios, the new item related information is alternatively or additionally output from the EST via a speaker.

Data modulation and coding (i.e., encoding and decoding) techniques are well known in the art, and therefore will not be described herein. Any known or to be known data modulation and coding technique (that is suitable for use with RF communications) can be used herein without limitation.

Referring now to FIG. 5, there is provided a detailed block diagram of an exemplary architecture for an energy source **500**. External energy source **122** of FIG. 1 and/or computing device **112** of FIG. 1 is(are) the same as or substantially similar to energy source **500**. As such, the following discussion of energy source **500** is sufficient for understanding external energy source **122** and/or computing device **112.**

Energy source **500** may include more or less components than those shown in FIG. 5. However, the components shown are sufficient to disclose an illustrative embodiment implementing the present solution. The hardware architecture of FIG. 5 represents one embodiment of a representative external energy source configured to facilitate improved inventory pricing management. As such, the energy source **500** of FIG. 5 implements at least a portion of a method for automatically and dynamically modifying item level information output from ESTs and/or ESLs in accordance with the present solution.

Some or all the components of the energy source **500** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 5, the energy source **500** comprises a user interface **502**, a Central Processing Unit ("CPU") **506**, a system bus **510**, a memory **512** connected to and accessible by other portions of energy source **500** through system bus **510**, and hardware entities **514** connected to system bus **510**. The user interface can include input devices (e.g., a keypad **550**) and output devices (e.g., speaker **552**, a display **554**, and/or light emitting diodes **556**), which facilitate user-software interactions for controlling operations of the energy source **500**.

At least some of the hardware entities **514** perform actions involving access to and use of memory **512**, which can be a RAM, a disk driver and/or a Compact Disc Read Only Memory ("CD-ROM"). Hardware entities **514** can include a disk drive unit **516** comprising a computer-readable storage medium **518** on which is stored one or more sets of instructions **520** (e.g., software code) configured to implement one or more of the methodologies, procedures, or functions described herein. The instructions **520** can also reside, completely or at least partially, within the memory **512** and/or within the CPU **506** during execution thereof by the energy source **500**. The memory **512** and the CPU **506** also can constitute machine-readable media. The term "machine-readable media", as used here, refers to a single medium or multiple media (e.g., a centralized or distributed database, and/or associated caches and servers) that store the one or more sets of instructions **520**. The term "machine-readable media", as used here, also refers to any medium that is capable of storing, encoding or carrying a set of instructions **320** for execution by the energy source **500** and that cause the energy source **500** to perform any one or more of the methodologies of the present disclosure.

In some scenarios, the hardware entities **514** include an electronic circuit (e.g., a processor) programmed for facilitating the provision of item level information in a language and currency used in a given geographic location whereat or wherein an EST or ESL resides. In this regard, it should be understood that the electronic circuit can access and run an item level information management application **524** installed on the energy source **500**. The software application **524** is generally operative to: obtain item level information and/or other information from ESTs and/or ESLs; program item level information onto ESTs and/or ESLs; convert the language, pricing and/or currency symbol of item level information; and/or facilitate registration of ESTs and/or ESLs with inventory systems. Other functions of the software application **524** will become apparent as the discussion progresses.

The energy source **500** also comprises a Magnetic Field or RF Signal ("MFRFS") generator **560**. The MFRFS generator **590** is configured to generate a magnetic field and/or RF signal from which energy is to be captured and stored by an energy harvesting component provided with an EST (e.g., EST **120** of FIG. 1) and/or ESL (e.g., ESL **104₁**, **104₂**, **104₃** of FIG. 1). Notably, an original information bearing signal including item related information **526** can be encoded into the generated magnetic field and/or RF signal.

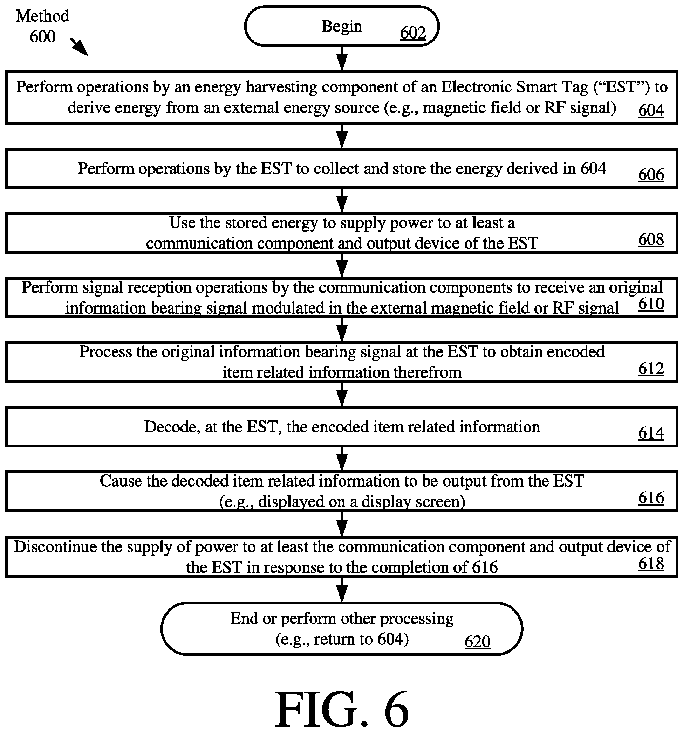

Referring now to FIG. 6, there is provided a flow diagram of an exemplary method **600** for operating an EST (e.g. EST **120** of FIG. 1 and/or EST **200** of FIGS. 2-4). Notably, method **600** can be implemented via an ESL instead of or in addition to an EST. A person skilled in the art would appreciate that certain modifications to method **600** would need to be made in this scenario.

As shown in FIG. 6, method **600** begins with **602** and continues with **604** where operations are performed by an energy harvesting component (e.g., coil **330** of FIG. 3 or RF energy harvesting circuit **430** of FIG. 4) of the EST to derive energy from an external energy source. In some scenarios, the external energy source comprises a magnetic field or RF signal. The derived energy is then collected and stored by the EST (e.g., by a power management circuit **332** of FIG. 3 or **432** of FIG. 4), as shown by **606**. The stored energy is used in **608** to supply power to at least a communication component (e.g., NFMIC device **306** of FIG. 3 or transceiver **406** of FIG. 4) and output device (e.g., output device(s) **312** of FIG. 3 or **412** of FIG. 4) of the EST.

Next in **610**, the communication component performs signal reception operations to receive an original information bearing signal modulated in the external magnetic field or RF signal. This processing can be achieved by (a) measuring a modulated magnetic field to obtain the original information-bearing signal or (b) demodulating a modulated carrier wave signal to obtain the original information-bearing signal. Notably, the modulated magnetic field and/or RF signal is the same as that used to collect and store energy at the EST. Various modulation and/or demodulation techniques are well known in the art, and therefore will not be described herein. Any known or to be known modulation/demodulation technique can be used herein without limitation.

As shown by **612**, the original information bearing signal is processed at the EST to obtain encoded item related information therefrom. The encoded item related information is then decoded in **614**. The decoding can be performed by a controller (e.g., controller **310** of FIG. 3 or **410** of FIG. 4) of the EST. Methods for encoding and decoding data are well known in the art, and therefore will not be described herein. Any known or to be known encoding/decoding method can be used herein without limitation.

Upon completing **614, 616** is performed where the decoded item related information is output from the EST. For example, the decoded item related information is used to update pricing information displayed on a display screen of the EST. The present solution is not limited to the particulars of this example. Once the information has been output from the EST, **816** is performed where the supply of power to the communication component and output device is discontinued. Subsequently, **620** is performed where method **600** ends or other processing is performed (e.g., method **600** returns to **604**).

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application. Thus, the breadth and scope of the present invention should not be limited by any of the above described embodiments. Rather, the scope of the invention should be defined in accordance with the following claims.

## Claims

1. A method for operating an Electronic Smart Tag, EST, comprising:
harvesting, by an energy harvesting circuit (430) of the EST (120, 200), energy from an external energy source (122);
using the energy to power at least a receiver and a display device of the EST (120, 200); **characterized by**
performing signal reception operations by the receiver to receive an original information bearing signal modulated in the external energy source (122), wherein the original information bearing signal is modulated both as magnetic field modulation and radio frequency modulation in the external energy source (122);
processing the original information bearing signal to obtain item related information therefrom by demodulating at least one of the magnetic field and the radio frequency field; and
causing the item related information to be displayed on the display device.

2. The method according to claim 1, further comprising discontinuing the supply of power to at least the display device subsequent to when the item related information is displayed thereon.

3. The method according to claim 1, wherein the external energy source (122) is a magnetic field.

4. The method according to claim 1, wherein the external energy source (122) is an RF signal.

5. The method according to claim 1, wherein the original information bearing signal is modulated in the external energy source (122) during the harvesting.

6. The method according to claim 1, wherein the original information bearing signal comprises a first indicator indicating a start of the item related information and a second indicator indicating an end of the item related information.

7. The method according to claim 1, wherein the energy harvesting circuit (430) comprises (1) a coil that is excited via a magnetic coupling to the external energy source and (122) a capacitor that stores energy derived from the external energy source (122).

8. The method according to claim 1, wherein power is supplied to the receiver and a display device when the capacitor is fully charged.

9. The method according to claim 8, wherein the coil is also part of the receiver and is used for magnetic induction communication of the original information bearing signal.

10. An Electronic Smart Tag, EST, (120, 200), comprising:
a display device;
a power source configured to harvest energy from an external energy source (122) and use the energy to supply power to the display device; **characterized by**
a receiver configured to perform signal reception operations for receiving an original information bearing signal modulated in the external energy source (122), after power has been supplied thereto from the power source, wherein the original information bearing signal is modulated both as magnetic field modulation and radio frequency modulation in the external energy source (122); and
a controller (310) configured to process the original information bearing signal to obtain item related information therefrom by demodulating at least one of the magnetic field and the radio frequency field and cause the item related information to be displayed on the display device.

11. The EST according to claim 10, wherein the supply of power to at least the receiver and display device is discontinued subsequent to when the item related information is displayed.

12. The EST according to claim 10, wherein the external energy source (122) is a magnetic field.

13. The EST according to claim 10, wherein the external energy source (122) is an RF signal.

14. The EST according to claim 10, wherein the original information bearing signal is modulated in the external energy source (122) during the harvesting.

15. The EST according to claim 10, wherein the original information bearing signal comprises a first indicator indicating a start of the item related information and a second indicator indicating an end of the item related information.

16. The EST according to claim 10, wherein the power source comprises (1) a coil that is excited via a magnetic coupling to the external energy source and (122) a capacitor that stores energy derived from the external energy source (122).

17. The EST according to claim 16, wherein power is supplied to the receiver and a display device when the capacitor is fully charged.

18. The EST according to claim 16, wherein the coil is also part of the receiver and is used for magnetic induction communication of the original information bearing signal.

## Patentansprüche

1. Verfahren zum Betreiben eines elektronischen Smarttags, EST, umfassend:
Sammeln von Energie aus einer externen Energiequelle (122) durch eine Energiesammelschaltung (430) des EST (120, 200);
Verwenden der Energie, um mindestens einen Empfänger und eine Anzeigevorrichtung des EST (120, 200) mit Leistung zu versorgen;
**gekennzeichnet durch**
Durchführen von Signalempfangsoperationen durch den Empfänger, um ein ursprüngliches Informationen tragendes Signal zu empfangen, das in der externen Energiequelle (122) moduliert wird, wobei das ursprüngliche Informationen tragende Signal sowohl als Magnetfeldmodulation als auch als Hochfrequenzmodulation in der externen Energiequelle (122) moduliert wird;
Verarbeiten des ursprüngliche Informationen tragenden Signals, um daraus durch Demodulieren von mindestens einem von dem Magnetfeld und dem Hochfrequenzfeld gegenstandsbezogene Informationen zu erhalten; und
Bewirken, dass die gegenstandsbezogenen Informationen auf der Anzeigevorrichtung angezeigt werden.

2. Verfahren nach Anspruch 1, ferner umfassend Unterbrechen der Zufuhr von Leistung mindestens an die Anzeigevorrichtung folgend darauf, dass die gegenstandsbezogenen Informationen darauf angezeigt werden.

3. Verfahren nach Anspruch 1, wobei die externe Energiequelle (122) ein Magnetfeld ist.

4. Verfahren nach Anspruch 1, wobei die externe Energiequelle (122) ein HF-Signal ist.

5. Verfahren nach Anspruch 1, wobei das ursprüngliche Informationen tragende Signal in der externen Energiequelle (122) während des Sammelns moduliert wird.

6. Verfahren nach Anspruch 1, wobei das ursprüngliche Informationen tragende Signal einen ersten Indikator, der einen Beginn der gegenstandsbezogenen Informationen angibt, und einen zweiten Indikator umfasst, der ein Ende der gegenstandsbezogenen Informationen angibt.

7. Verfahren nach Anspruch 1, wobei die Energiesammelschaltung (430) (1) eine Spule, die über eine magnetische Kopplung an die externe Energiequelle angeregt wird, und (122) einen Kondensator umfasst, der von der externen Energiequelle (122) abgeleitete Energie speichert.

8. Verfahren nach Anspruch 1, wobei Leistung an den Empfänger und eine Anzeigevorrichtung zugeführt wird, wenn der Kondensator vollständig geladen ist.

9. Verfahren nach Anspruch 8, wobei die Spule zudem Teil des Empfängers ist und zur Magnetinduktionskommunikation des ursprünglichen Informationen tragenden Signals verwendet wird.

10. Elektronisches Smarttag, EST, (120, 200), umfassend:
eine Anzeigevorrichtung;
eine Leistungsquelle, die dazu konfiguriert ist, Energie aus einer externen Energiequelle (122) zu sammeln und die Energie zu verwenden, um der Anzeigevorrichtung Leistung zuzuführen; **gekennzeichnet durch** einen Empfänger, der dazu konfiguriert ist, Signalempfangsoperationen zum Empfangen eines ursprünglichen Informationen tragenden Signals durchzuführen, das in der externen Energiequelle (122) moduliert wird, nachdem ihm von der Leistungsquelle Leistung zugeführt wurde, wobei das ursprüngliche Informationen tragende Signal sowohl als Magnetfeldmodulation als auch als Hochfrequenzmodulation in der externen Energiequelle (122) moduliert wird; und eine Steuerung (310), die dazu konfiguriert ist, das ursprüngliche Informationen tragende Signal zu verarbeiten, um daraus durch Demodulieren von mindestens einem von dem Magnetfeld und dem Hochfrequenzfeld gegenstandsbezogene Informationen zu erhalten, und zu bewirken, dass die gegenstandsbezogenen Informationen auf der Anzeigevorrichtung angezeigt werden.

11. EST nach Anspruch 10, wobei die Zufuhr von Leistung mindestens an den Empfänger und die Anzeigevorrichtung folgend darauf unterbrochen wird, dass die gegenstandsbezogenen Informationen angezeigt werden.

12. EST nach Anspruch 10, wobei die externe Energiequelle (122) ein Magnetfeld ist.

13. EST nach Anspruch 10, wobei die externe Energiequelle (122) ein HF-Signal ist.

14. EST nach Anspruch 10, wobei das ursprüngliche Informationen tragende Signal in der externen Energiequelle (122) während des Sammelns moduliert wird.

15. EST nach Anspruch 10, wobei das ursprüngliche Informationen tragende Signal einen ersten Indikator, der einen Beginn der gegenstandsbezogenen Informationen angibt, und einen zweiten Indikator umfasst, der ein Ende der gegenstandsbezogenen Informationen angibt.

16. EST nach Anspruch 10, wobei die Leistungsquelle (1) eine Spule, die über eine magnetische Kopplung an die externe Energiequelle angeregt wird, und (122) einen Kondensator umfasst, der von der externen Energiequelle (122) abgeleitete Energie speichert.

17. EST nach Anspruch 16, wobei Leistung an den Empfänger und eine Anzeigevorrichtung zugeführt wird, wenn der Kondensator vollständig geladen ist.

18. EST nach Anspruch 16, wobei die Spule zudem Teil des Empfängers ist und zur Magnetinduktionskommunikation des ursprünglichen Informationen tragenden Signals verwendet wird.

## Revendications

1. Procédé pour le fonctionnement d'une étiquette intelligente électronique, EST, comprenant :
la récolte, par un circuit de récupération d'énergie (430) de l'EST (120, 200), de l'énergie provenant d'une source d'énergie externe (122) ;
l'utilisation de l'énergie pour alimenter au moins un récepteur et un dispositif d'affichage de l'EST (120, 200) ; **caractérisé par**
l'exécution des opérations de réception de signal par le récepteur pour recevoir un signal porteur d'informations d'origine modulé dans la source d'énergie externe (122), dans lequel le signal porteur d'informations d'origine est modulé à la fois en tant que modulation de champ magnétique et modulation de radiofréquence dans la source d'énergie externe (122) ;
le traitement du signal porteur d'informations d'origine pour obtenir des informations relatives à l'élément en démodulant au moins l'un parmi le champ magnétique et le champ radiofréquence ; et
le fait d'amener les informations relatives à l'élément à s'afficher sur le dispositif d'affichage.

2. Procédé selon la revendication 1, comprenant en outre la mise en arrêt de l'alimentation électrique d'au moins le dispositif d'affichage après que les informations relatives à l'élément y sont affichées.

3. Procédé selon la revendication 1, dans lequel la source d'énergie externe (122) est un champ magnétique.

4. Procédé selon la revendication 1, dans lequel la source d'énergie externe (122) est un signal RF.

5. Procédé selon la revendication 1, dans lequel le signal porteur d'informations d'origine est modulé dans la source d'énergie externe (122) pendant la récolte.

6. Procédé selon la revendication 1, dans lequel le signal porteur d'informations d'origine comprend un premier indicateur indiquant un début des informations relatives à l'élément et un second indicateur indiquant une fin des informations relatives à l'élément.

7. Procédé selon la revendication 1, dans lequel le circuit de récupération d'énergie (430) comprend (1) une bobine qui est alimentée via un couplage magnétique avec la source d'énergie externe et (122) un condensateur qui stocke l'énergie dérivée depuis la source d'énergie externe (122).

8. Procédé selon la revendication 1,
dans lequel l'alimentation est fournie au récepteur et un dispositif d'affichage lorsque le condensateur est complètement chargé.

9. Procédé selon la revendication 8, dans lequel la bobine fait également partie du récepteur et est utilisée pour la communication par induction magnétique du signal porteur d'informations d'origine.

10. Étiquette intelligente électronique,
EST, (120, 200), comprenant :
un dispositif d'affichage ;
une source d'énergie conçue pour récolter de l'énergie depuis une source d'énergie externe (122) et utiliser l'énergie pour fournir de l'énergie au dispositif d'affichage ; **caractérisé par**
un récepteur conçu pour exécuter des opérations de réception de signal pour recevoir un signal porteur d'informations d'origine modulé dans la source d'énergie externe (122), après que l'énergie lui a été fournie depuis la source d'alimentation, dans lequel le signal porteur d'informations d'origine est modulé à la fois en tant que modulation de champ magnétique et modulation de radiofréquence dans la source d'énergie externe (122) ; et
un dispositif de commande (310) conçu pour traiter le signal porteur d'informations d'origine afin d'en obtenir des informations relatives à l'élément en démodulant au moins l'un parmi le champ magnétique et le champ radiofréquence et amener les informations relatives à l'élément à s'afficher sur le dispositif d'affichage.

11. EST selon la revendication 10, dans lequel l'alimentation électrique d'au moins le récepteur et le dispositif d'affichage est mise en arrêt après l'affichage des informations relatives à l'élément.

12. EST selon la revendication 10, dans lequel la source d'énergie externe (122) est un champ magnétique.

13. EST selon la revendication 10, dans lequel la source d'énergie externe (122) est un signal RF.

14. EST selon la revendication 10, dans lequel le signal porteur d'informations d'origine est modulé dans la source d'énergie externe (122) pendant la récolte.

15. EST selon la revendication 10, dans lequel le signal porteur d'informations d'origine comprend un premier indicateur indiquant un début des informations relatives à l'élément et un second indicateur indiquant une fin des informations relatives à l'élément.

16. EST selon la revendication 10, dans lequel la source d'énergie comprend (1) une bobine qui est excitée via un couplage magnétique avec la source d'énergie externe et (122) un condensateur qui stocke l'énergie dérivée de la source d'énergie externe (122).

17. EST selon la revendication 16, dans lequel l'énergie est fournie au récepteur et à un dispositif d'affichage lorsque le condensateur est complètement chargé.

18. EST selon la revendication 16, dans lequel la bobine fait également partie du récepteur et est utilisée pour la communication par induction magnétique du signal porteur d'informations d'origine.
